# EUROPEAN PATENT APPLICATION

(11) **EP 2 270 293 A1**
(43) Date of publication of application: **05.01.2011**
(21) Application number: 09164326.2
(22) Date of filing: 01.07.2009
(51) Int. Cl.: E04G 23/00, C04B 41/53

(54) **Method and system for desalting a surface of a structure**

(71) Applicant: Jahn, Heinz Herbert Otto, 3232 AA Brielle (NL)
(72) Inventor: Jahn, Heinz Herbert Otto, 3232 AA Brielle (NL)
(74) Representative: van Kooij, Adriaan

(57) **Abstract**

Method for desalting a surface of a structure, in particular a building, comprising providing a volume of steam adjacent said surface, and exposing said surface to said volume of steam for a predetermined period of time, wherein said predetermined period of time is at least one hour, preferably at least two hours.

## Description

The invention relates to a method and a system for desalting a surface of a structure, in particular a building. The invention furthermore relates to the use of a distribution device for desalting a surface of a structure.

Under the influence of acid rain, among others, the problem of the accumulation of salts in building structures is increasing. In particular in buildings manufactured from mineral building elements, for instance masonry and/or buildings out of natural stone, the accumulation of salts is considered as adverse. Buildings in bad repair and old buildings especially suffer from this accumulation of salts. Conditions as damaged roofs, gutters and/or pointing play an important role in the degree of salt accumulation, due to the easy access of water to such structures. Salts which are considered as adverse in such a structure comprise chloride, sulphate, nitrate, calcium, potassium, sodium and magnesium.

Not only does this accumulation result in a whitish deposit which is considered as unattractive, also the heat insulating properties of said structure decrease.

In order to desalt surface such as walls, it is known to apply compresses to said surfaces. These compresses can comprise hydrotalcite, zeolite and cellulose, but also papier-mâché and compresses based on electro-osmosis. The working of these compresses is based on the extraction of moist out of the structure. The results from a treatment with said compresses are usually not satisfactory. Not only is the working depth of said compresses limited since only salts up to 1 to 3 mm in the structure are absorbed, also the application of said compresses is a time and labour consuming operation. Furthermore, after removal of said compresses, the surface of the structure needs to be thoroughly cleaned to remove all the remainders of the compresses.

It is an object of the invention, among others, to overcome these drawbacks and to provide an efficient, easy and/or cost effective method for desalting a surface of a structure.

According to the invention, a method for desalting a surface of a structure, in particular a building, is provided, the method comprising:
- providing a volume of steam adjacent said surface, and;
- exposing said surface to said volume of steam for a predetermined period of time.

By exposing the surface, for instance a wall, of the structure to a volume of steam for a predetermined period of time, the concentration of salts in said structure is significantly decreased. Not only is the concentration of salts nearby the surface decreased, also the concentration of salts deeper in said structure was found to decrease significantly. The volume of steam is kept in contact with said surface during the process, allowing the steam to migrate in the structure for the removal of salts.

Where the use of compresses for desalting is based on the extraction of moist from the structure, the method according to the invention is based on the addition of water to the structure, albeit in the form of steam. It will further be appreciated that with the method according to the invention, the labour consuming processes of applying and removing said compresses can be omitted, resulting in an efficient and easy method for desalting a structure.

With the volume of steam according to the invention a three dimensional space adjacent said surface is meant, wherein at least a part of the steam in said space is in contact with the surface to be treated. The concentration of steam in said volume or space is sufficiently high to allow migration of the steam into the structure through said surface.

It should be noted that with steam according to the invention water in the form of gas is meant. Preferably distilled or demineralised water is used for the production of steam. Distilled and demineralised water comprise less impurities compared to for instance tap water. As an example, the water usage for the creation of steam is four litres per hour. This will result in approximately 6,8 cubic meters of steam. It is however not excluded that another medium than water can be used in the invention, provided that this medium has salt solvable properties. It was found that the gas easily enters the structure through the surface for the desalting process. Without limiting the invention, it is believed that at least a small amount of the gas condensates and that the salts in the internal structure dissolve in this condensation. The condensation can then migrate towards the surface for the removal of said salts from said structure.

The predetermined period of time to achieve good desalting results is dependent on the porosity of the material of the structure under treatment. The amount of steam entering the structure for the desalting process is dependent on the structure to be treated. A structure with high porosity allows the steam to enter more easily than a structure with a relative high density. Also the composition or finishing of the surface can be of influence to the migration of steam into the structure. A surface provided with relative impermeable finishing, for instance in the form of paint, requires a longer period of time of treatment to achieve satisfactory desalting results.

Preferably, prior to treating the surface with steam, several measurements are carried out to indentify the porosity of the structure and/or the permeability of the surface. These measurements can comprise drilling holes in said structure for the determination of the inner structure. Based on these measurements, the predetermined period of time and/or the amount of steam used can be determined.

However, according to a preferred embodiment of the invention, said predetermined period of time is at least one hour, preferably at least two hours. Tests have indicated that for instance by exposing bricks and clinkers to steam for four hours, satisfactory results have been achieved in terms of desalting.

A further embodiment of the method according to the invention comprises receiving the condensation from said volume and determining the status of the desalting process based on the concentration of salts in said condensation. The amount of salts dissolved in said condensation, preferably measured by the conductivity of said condensation, is found to be a good predictor for the progress of the process. In case a decreasing amount of salts is measured, the process of desalting is considered to be nearly complete.

According to a further preferred embodiment, said volume extends parallel to said surface. A large area of the surface can hereby be exposed with steam. The depth of said volume, that is the size of said volume in the direction perpendicular to the surface, is preferably small, limiting the amount of steam needed for the treatment of the surface.

According to a further preferred embodiment, said volume is a substantially stationary volume of steam. The volume of steam is hereby formed by steam particles which are kept within said volume as much as possible. This is in contrast to a volume being formed by a jet or stream, wherein the volume is formed by steam particles constantly entering said volume at a first end and leaving said volume at another end. Providing a relative stationary volume of steam limits the amount of steam needed for the treatment.

According to a further preferred embodiment the volume is moved to a further surface of said structure after the predetermined period of time. This allows a large surface of a structure to be treated in an efficient way.

A further embodiment of the method according to the invention comprises the step of drying said surface after the predetermined period of time. This improves the heat insulating properties of said structure after the desalting process.

The invention furthermore relates to a system for desalting a surface of a structure, in particular a building, comprising a steam generator and a distribution device for providing a volume of steam adjacent to said surface. The generator is arranged to create steam for distribution towards the surface of the structure with the distribution device. Preferably the steam generator and the distribution device are connected using suitable connection means, for instance a flexible heat and high pressure resistant tube. It is however also possible that the distribution device and the steam generator are formed integrally.

Preferably said distribution device is arranged to provide a volume of steam extending at least 1 by 1 meter, preferably at least 2 by 2 meters, parallel to said surface. This enables an efficient treatment of the surface. It should however be noted that also different sizes of distribution devices can be used, based on the surface to be treated. It can also be possible that the distribution device is arranged to provide a volume of steam with a form other than a rectangle if needed.

More preferably the distribution device has a form corresponding to the volume of steam to be created, wherein the distribution device is arranged to provide a volume of steam between the distribution device and the surface to be treated. This limits the amount of steam needed to form said volume, especially when the distance between said distribution device and the surface, which corresponds to the depth of the volume, is relatively small. In case a non flat surface has to be treated, the distribution device can have a form which is complementarily to the non-flat surface to allow the creation of a suitable volume of steam in contact with said surface.

According to a preferred embodiment of the system according to the invention, said distribution device comprises guiding means for distributing said steam in a plane parallel to said surface and at least one outlet for creating said volume of steam adjacent said surface. The steam created by the generator is hereby distributed in a plane parallel to said surface for creating the volume between said plane and said surface. Preferably said distribution device comprises a plurality of outlets from producing said volume of steam. This allows a homogeneous distribution of the steam in said volume.

According to a further preferred embodiment of the system according to the invention, the distribution device comprises a framework of tubular members, wherein said tubular members are provided with a plurality of outlets for creating said volume of steam. By using tubular member manufactured into a framework creates an efficient and reliable distribution device. In operation, the outlets are directed towards the surface to be treated for creating a volume of steam between said framework and the surface. The tubular members can comprise tubes manufactured from stainless steel. It is however also possible to use tubular members in the form of heat and pressure resistant hoses.

According to a further preferred embodiment of the system according to the invention, the distribution device comprises a double-walled plate shaped member, wherein one wall is provided with a plurality of outlets for creating said volume of steam. The space between said walls is arranged to distribute the steam in a plane parallel to the surface and the plurality of outlets are arranged to create the volume between the wall and said surface.

A further preferred embodiment of the system further comprises shielding means for creating a substantially enclosed volume adjacent said surface. The shielding means provide a substantially stationary volume of steam adjacent the surface to be treated. The shielding means hereby form a space enclosed by the surface to be treated and the shielding means. This limits the amount of steam needed for the process since substantially all the generated steam is kept in contact with the surface of the structure.

The shielding means preferably comprise a shielding surface provided with a rim, wherein the rim extends adjacent said surface and wherein the volume of steam is formed between the shielding surface and the surface to be treated. The shielding means are manufactured from a material impermeable to steam, for instance plastics. The shielding means are preferably provided around the distribution device enclosing a volume between the shielding means and the surface, wherein the distribution device extends in said volume. It is however also possible that the distribution device is formed integrally with the shielding means, for instance in the form of a distribution device manufactured from a flexible material, wherein the device is inflated by steam forming the volume.

A further preferred embodiment of the system comprises receiving means, preferably a gutter, for receiving condensation from said volume of steam. The gutter preferably extends on the lower side of the distribution device. The distribution device can furthermore be provided with means for measuring the amount of salts dissolved in said condensation for the determination of the progress of the desalting process.

The invention furthermore relates to the use of the distribution device according to the invention in the method for desalting a surface of a structure according to the invention.

The present invention is further illustrated by the following Figures, which show a preferred embodiment of the device according to the invention, and are not intended to limit the scope of the invention in any way, wherein:
- Figure 1 schematically shows the system according to the invention;
- Figure 2 schematically shows a detail of the distribution device;
- Figure 3 schematically shows the system in side view;
- Figures 4 and 5 schematically show further embodiments of the distribution device.

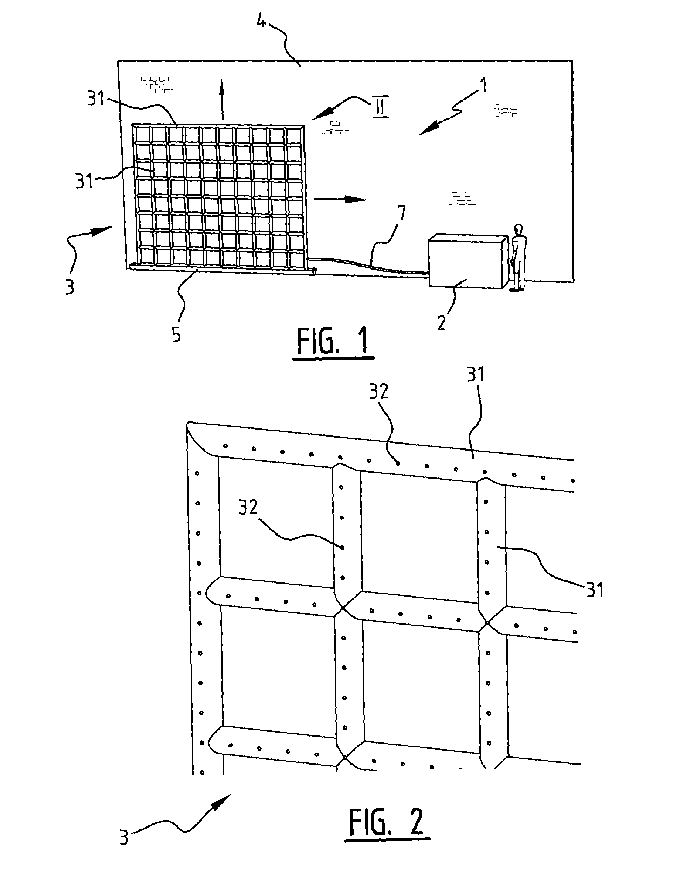

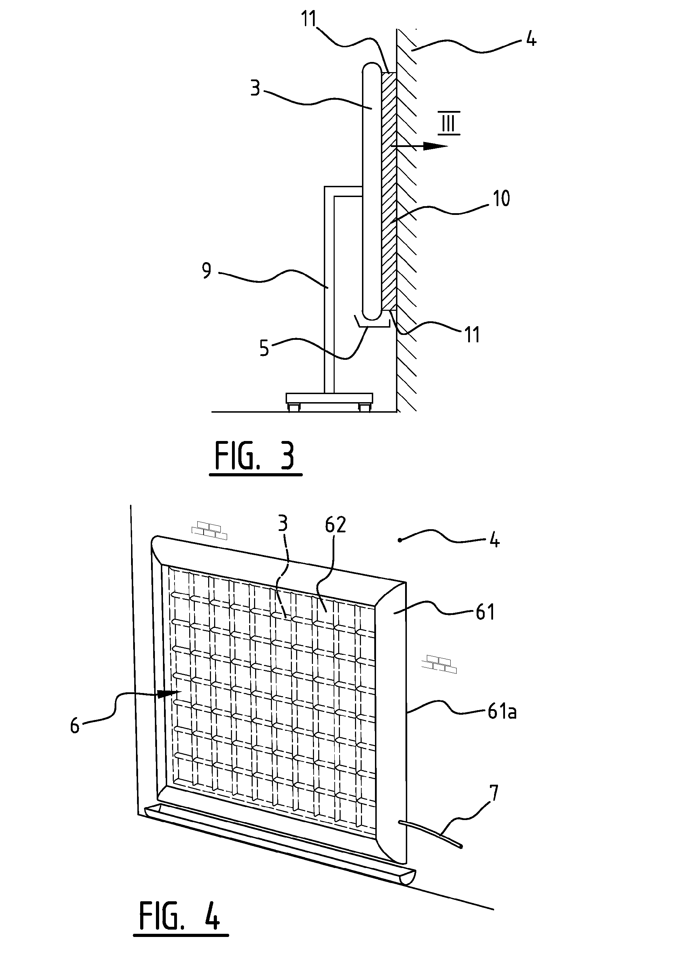

In figure 1 a system according to the invention is shown. The system comprises a distribution device in the form of a framework 3 manufactured from stainless steel tubes 31. The framework 3 is sized three by two meters and is placed nearby a surface 4 to be desalted. The system 1 is here for provided with suitable holding means 9, see figure 3, for holding the framework 3 in place before said surface. The system 1 furthermore comprises a steam generator 2 which generates a constant flow of steam for delivery to the framework 3. The framework 3 and the generator 2 are connected using a pressure and temperature resistant flexible hose 7. On the lower side, the framework 3 is provided with receiving means in the form of a gutter 5 as will be explained in more detail later.

In figure 2 a detail of the framework 3 is shown. On the side facing the surface 4 in use, the tubes 31 are provided with a plurality of outlets 32. The outlets 32 have a diameter of 1,0 to 1,5 mm. Steam supplied by hose 7 is guided through the tubes 31 and is distributed in a plane parallel to the surface 4. The steam is outputted through said outlets 32 for creating a volume of steam between said framework 3 and the surface 4.

As is shown in figure 3, the volume 10 extends between said framework 3 and the surface 4. By exposing the surface 4 to the steam held in the volume 10, the structure comprising the surface 4 is desalted. The surface 4 is exposed to the volume of steam 10 for a period of at least one hour. The volume 10 is hereby in contact with the surface 4 such that steam can migrate into the structure through surface 4, as indicated with III.

Condensation formed in the volume 10 is received in the gutter 5. By determining the concentration of salts in the received condensation, the progress of the desalting process can be established. For determining the concentration of salts in the fluid in gutter 5, the conductivity of the fluid is measured.

As is shown in figure 3, the border or side portions of the volume 10, indicated with 11, are open. This will result in the escape of steam held in volume 10. In order to provide a substantially stationary volume 10 of steam adjacent surface 4, shielding means can be provided.

In figure 4 shielding means in the form of a plastic cover 6 are shown. The cover 6 is impermeable to steam and comprises a shielding surface 62 parallel to the surface 4 and a rim portion 61 extending towards said surface 4. The end portions 61a are in close contact with the surface 4. The cover 6 hereby forms an enclosed space formed by the cover 6 and the surface 4. In this space the volume of steam 10 is provided. In this embodiment a framework 3 as shown in figure 1 is held in the enclosed space. However, it is also possible to supply steam directly in the space defined by the cover 6 using tube 7.

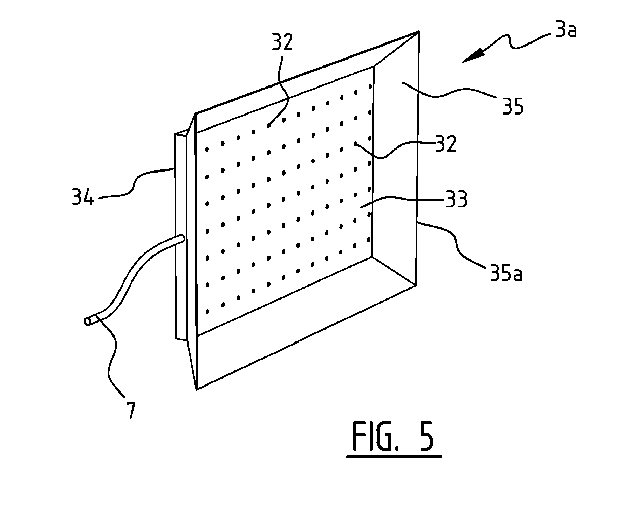

In figure 5 another embodiment of the distribution device is shown. The distribution device is formed by a double walled plate shaped member 3a. The walls 34 and 33 are provided on a distance from each other, allowing steam to be distributed in a plane parallel to the surface 4 to be treated. The wall 33 facing towards said surface 4 in use is provided with a plurality of outlets 32 for creating a volume of stream between the wall 33 and the surface 4. In order to be able to create a substantially stationary volume, the device 3a is provided with a rim 35 for enclosing the volume of steam. The end portions 35a of the rim 35 are in use in close contact with the surface 4.

As an example, a wall manufactured from bricks is exposed to a volume of steam according to the invention. The wall is kept in contact with steam for a period of four hours. Up to a depth of 60 mm into said wall a significant decrease of salts was measured.

The present invention is not limited to the embodiment shown, but extends also to other embodiments falling within the scope of the appended claims.

## Claims

1. Method for desalting a surface of a structure, in particular a building, comprising:
- providing a volume of steam adjacent said surface, and;
- exposing said surface to said volume of steam for a predetermined period of time.

2. Method according to claim 1, wherein said predetermined period of time is at least one hour, preferably at least two hours.

3. Method according to claim 1 or 2, wherein said volume extends parallel to said surface.

4. Method according to claim 1, 2 or 3, wherein said volume is a substantially stationary volume of steam.

5. Method according to any of the preceding claims 1 to 4, further comprising receiving the condensation from said volume and determining the status of the desalting process based on the concentration of salts in said condensation.

6. Method according to any of the preceding claims 1 to 5, wherein the volume is moved to a further surface of said structure after the predetermined period of time.

7. Method according to any of the preceding claims 1 to 6, further comprising the step of drying said surface after the predetermined period of time.

8. System for desalting a surface of a structure, in particular a building, comprising a steam generator and a distribution device for providing a volume of steam adjacent to said surface.

9. System according to claim 8, wherein said distribution device is arranged to provide a volume of steam extending at least 1 by 1 meter, preferably at least 2 by 2 meters, parallel to said surface.

10. System according to claim 8 or 9, wherein said distribution device comprises guiding means for distributing said steam in a plane parallel to said surface and at least one outlet for creating said volume of steam adjacent said surface.

11. System according to claim 8, 9 or 10, wherein the distribution device comprises a framework of tubular members, wherein said tubular members are provided with a plurality of outlets for creating said volume of steam.

12. System according to claim 8, 9 or 10, wherein the distribution device comprises a double-walled plate shaped member, wherein one wall is provided with a plurality of outlets for creating said volume of steam.

13. System according to any of the preceding claims 8 to 12, further comprising shielding means for creating a substantially enclosed volume adjacent said surface.

14. System according to any of the preceding claims 8 to 13, further comprising receiving means, preferably a gutter, for receiving condensation from said volume of steam.

15. Use of the distribution device according to any of the preceding claims 8 to 14 in the method for desalting a surface of a structure, in particular the method according to any of the preceding claims 1 to 7.
